# EUROPEAN PATENT APPLICATION

(11) **EP 4 322 611 A1**
(43) Date of publication of application: **14.02.2024**
(21) Application number: 22806329.3
(22) Date of filing: 29.03.2022
(51) Int. Cl.: H04W 36/00, H04W 72/04, H04W 76/15

(54) **ANTI-INTERFERENCE METHOD FOR WIRELESS COMMUNICATION, ELECTRONIC DEVICE, CHIP, AND READABLE STORAGE MEDIUM**

(30) Priority: 11.05.2021 CN 202110513446
(71) Applicant: Huawei Technologies Co., Ltd., Shenzhen, Guangdong 518129 (CN)
(72) Inventor: WANG, Shipeng, Shenzhen, Guangdong 518129 (CN); XIA, Jikang, Shenzhen, Guangdong 518129 (CN); YANG, Jianhua, Shenzhen, Guangdong 518129 (CN)
(74) Representative: Pfenning, Meinig & Partner mbB
(86) International application number: PCT/CN2022/083696
(87) International publication number: WO 2022/237359

(57) **Abstract**

Embodiments of this application relate to the field of terminals, and provide an anti-interference method for wireless communication. A second electronic device may obtain channel scores of a plurality of channels on which a wireless communication link can be established to a first electronic device, so that a channel having a positive gain can be selected from the plurality of channels based on the channel scores, and the first electronic device and the second electronic device can switch from a current link channel to the channel having the positive gain. Embodiments of this application further provide an electronic device, a chip, and a computer readable storage medium. In this application, a communication channel between the two electronic devices that establish a link can be dynamically changed, and channel interference may be resisted, so that the electronic devices switch to the channel having the positive gain for communication. Therefore, communication performance deterioration caused by channel switching is avoided, and user experience can be improved.

## Description

This application claims priority to Chinese Patent Application No. 202110513446.4, filed with the China National Intellectual Property Administration on May 11, 2021, and entitled "ANTI-INTERFERENCE METHOD FOR WIRELESS COMMUNICATION, ELECTRONIC DEVICE, CHIP, AND READABLE STORAGE MEDIUM", which is incorporated herein by reference in its entirety.

### TECHNICAL FIELD

This application relates to the field of terminal technologies, and in particular, to an anti-interference method for wireless communication, an electronic device, a chip, and a computer readable storage medium.

### BACKGROUND

Currently, wireless communication is increasingly widely used. For example, Wi-Fi is applied not limited to a connection between a router and a Wi-Fi device, and Wi-Fi point-to-point communication scenarios, such as a projection scenario and a Wi-Fi direct scenario, may further occur. When a user performs communication by using a Wi-Fi device, there may be relatively strong interference, and the relatively strong interference may cause a relatively large air interface latency and a rate reduction, affecting smoothness of an application currently running on the Wi-Fi device and affecting user experience.

Existing anti-interference solutions generally include a physical layer anti-interference solution, an automatic channel selection solution, and the like, and interference may be resisted to some extent. However, as Wi-Fi application scenarios become more complex, the existing anti-interference solutions already cannot completely ensure elimination of interference impact in some complex scenarios. For example, when user equipment (User Equipment, UE) is linked to an access point (Access Point, AP), the UE may further perform a projection service to a tablet computer. In this scenario, a channel on which the UE and the AP are located is the same as a channel on which the UE and the tablet computer are located. After the channel is interfered with, the channel cannot be changed anytime or anywhere. Even if the channel on which the UE and the tablet computer are located may be changed, performance may deteriorate, and not all application scenarios have positive gains.

### SUMMARY

In view of this, it is necessary to provide an anti-interference method for wireless communication, to overcome the foregoing problem, so that communication performance deterioration caused by channel switching can be avoided.

A first aspect of embodiments of this application discloses an anti-interference method for wireless communication, including: obtaining, by a second electronic device, channel scores of a plurality of channels on which a wireless communication link can be established to a first electronic device, to select a channel having a positive gain from the plurality of channels based on the channel scores; sending, by the second electronic device, a first channel switching frame to the first electronic device, so that the first electronic device switches from a first channel to the channel having the positive gain, where the first channel is a channel used by the first electronic device to currently establish a wireless communication link to the second electronic device; and switching, by the second electronic device when the second electronic device receives an acknowledgment character transferred by the first electronic device, from the first channel to the channel having the positive gain.

Based on the technical solution, a communication channel between the two electronic devices that establish a link can be dynamically changed, and channel interference may be resisted, so that the electronic devices switch to the channel having the positive gain for communication. Therefore, communication performance deterioration caused by channel switching can be avoided, and user experience can be improved.

In a possible implementation, the obtaining, by a second electronic device, channel scores of a plurality of channels on which a wireless communication link can be established to a first electronic device includes: performing, by the second electronic device, channel switching once every a first preset time, to listen on each of the plurality of channels for a second preset time, to obtain a channel parameter of each channel; and performing, by the second electronic device, channel scoring on each channel based on the channel parameter of each channel.

Based on the technical solution, the second electronic device may switch to another channel every the first preset time to listen to a channel parameter, and perform channel scoring on each channel based on the channel parameter of each channel.

In a possible implementation, the channel parameter includes a channel duty cycle and a channel received signal strength indicator (Received Signal Strength Indicator, RSSI), and the performing channel scoring on each channel based on the channel parameter of each channel includes: obtaining, by the second electronic device, a channel rate of each channel within the second preset time through calculation based on the channel duty cycle and the channel RSSI of each of the plurality of channels; filtering, by the second electronic device, the channel rate of each channel within the second preset time based on a preset filtering algorithm, to obtain a channel rate of each channel; and performing, by the second electronic device, channel scoring on each channel based on the channel rate of each channel, where the channel rate is positively correlated with the channel score.

Based on the technical solution, the second electronic device may obtain the channel rate of the channel within the second preset time through calculation based on the channel duty cycle and the channel RSSI, and perform channel scoring based on the channel rate obtained after the filtering.

In a possible implementation, the obtaining, by a second electronic device, channel scores of a plurality of channels on which a wireless communication link can be established to a first electronic device includes: receiving, by the second electronic device, the channel score of each channel that is transferred by the first electronic device.

Based on the technical solution, the second electronic device may receive the channel score of each channel transferred by the first electronic device, to select the channel having the positive gain from the plurality of channels.

In a possible implementation, the obtaining, by a second electronic device, channel scores of a plurality of channels on which a wireless communication link can be established to a first electronic device includes: performing, by the second electronic device, channel switching once every a first preset time, to perform listening on each of the plurality of channels for a second preset time, to obtain a channel parameter of each channel; obtaining, by the second electronic device, a first scoring result of each channel based on the channel parameter of each channel; receiving, by the second electronic device, a second scoring result of each channel that is transferred by the first electronic device; and obtaining, by the second electronic device, the channel score of each channel based on the first scoring result and the second scoring result.

Based on the technical solution, the second electronic device may select the channel having the positive gain from the plurality of channels based on the channel scoring result of the second electronic device and the channel scoring result of the first electronic.

In a possible implementation, the selecting a channel having a positive gain from the plurality of channels based on the channel scores includes: selecting, by the second electronic device from the plurality of channels, a channel having a highest channel score as the channel having the positive gain.

Based on the technical solution, the second electronic device may use the channel having the highest channel score as the channel having the positive gain.

In a possible implementation, the selecting a channel having a positive gain from the plurality of channels based on the channel scores includes: when the second electronic device detects that an air interface latency of the first channel is greater than or equal to a preset threshold, selecting, by the second electronic device, the channel having the positive gain from the plurality of channels based on the channel scores.

Based on the technical solution, when the second electronic device detects channel interference, the second electronic device may start a channel switching procedure, and select the channel having the positive gain from the plurality of channels based on the channel scores, to perform channel switching.

In a possible implementation, the second electronic device includes a listening state and a working state, and the sending, by the second electronic device, a first channel switching frame to the first electronic device includes: when the second electronic device detects, in the working state, that the air interface latency of the first channel reaches the preset threshold, obtaining, by the second electronic device, a channel switching time through calculation based on a time node at which it is currently detected that the air interface latency reaches the preset threshold and a time node of entering the listening state next time; and when the second electronic device determines that the channel switching time meets a preset collision requirement, sending, by the second electronic device, the first channel switching frame to the first electronic device, where the preset collision requirement includes that the channel switching time is less than a third preset time.

In a possible implementation, the selecting a channel having a positive gain from the plurality of channels based on the channel scores includes: when the second electronic device is in a preset service scenario, selecting, by the second electronic device, the channel having the positive gain from the plurality of channels based on the channel scores.

Based on the technical solution, when the second electronic device is in the preset service scenario, the second electronic device may start a channel switching procedure, and select the channel having the positive gain from the plurality of channels based on the channel scores, to perform channel switching.

In a possible implementation, the anti-interference method for wireless communication further includes: when the second electronic device ends the preset service scenario, sending, by the second electronic device, a second channel switching frame to the first electronic device, so that the first electronic device switches back from the channel having the positive gain to the first channel; and when the second electronic device receives again the acknowledgment character transferred by the first electronic device, switching, by the second electronic device, back from the channel having the positive gain to the first channel.

Based on the technical solution, when the preset service scenario is ended, the first electronic device and the second electronic device may further switch back to an original channel for communication.

In a possible implementation, the first electronic device is a group client (GC) device, and the second electronic device is a group owner (GO) device.

In a possible implementation, the second electronic device establishes a wireless communication link to each of the first electronic device and a third electronic device on the first channel, and the anti-interference method for wireless communication further includes: sending, by the second electronic device, the first channel switching frame to the third electronic device, so that the third electronic device switches from the first channel to the channel having the positive gain.

Based on the technical solution, a communication channel between the three electronic devices that establish a link can be dynamically changed, and channel interference may be resisted, so that the electronic devices switch to the channel having the positive gain for communication. Therefore, communication performance deterioration caused by channel switching can be avoided, and user experience can be improved.

In a possible implementation, the switching, by the second electronic device when the second electronic device receives an acknowledgment character transferred by the first electronic device, from the first channel to the channel having the positive gain includes: switching, by the second electronic device when the second electronic device receives the acknowledgment character transferred by the first electronic device or an acknowledgment character transferred by the third electronic device, from the first channel to the channel having the positive gain.

By using the technical solution, the second electronic device may perform channel switching when receiving the acknowledgment character transferred by the first electronic device or the third electronic device.

According to a second aspect, an embodiment of this application provides an anti-interference method for wireless communication, including: obtaining, by a first electronic device, channel scores of a plurality of channels on which a wireless communication link can be established to a second electronic device; sending, by the first electronic, the channel scores of the plurality of channels to the second electronic device, so that the second electronic device selects a channel having a positive gain from the plurality of channels based on the channel scores; and when the first electronic device receives a channel switching frame sent by the second electronic device, sending, by the first electronic device, an acknowledgment character to the second electronic device; and switching, by the first electronic device, from a first channel to the channel having the positive gain, where the first channel is a channel used by the first electronic device to currently establish a wireless communication link to the second electronic device.

Based on the technical solution, a communication channel between the two electronic devices that establish a link can be dynamically changed, and channel interference may be resisted, so that the electronic devices switch to the channel having the positive gain for communication. Therefore, communication performance deterioration caused by channel switching can be avoided, and user experience can be improved.

In a possible implementation, the obtaining, by a first electronic device, channel scores of a plurality of channels on which a wireless communication link can be established to a second electronic device includes: performing, by the first electronic device, channel switching once every a first preset time, to listen on each of the plurality of channels for a second preset time, to obtain a channel parameter of each channel; and performing, by the first electronic device, channel scoring on each channel based on the channel parameter of each channel.

Based on the technical solution, the first electronic device may switch to another channel every the first preset time to listen to a channel parameter, and perform channel scoring on each channel based on the channel parameter of each channel.

In a possible implementation, the channel parameter includes a channel duty cycle and a channel RSSI, and the performing channel scoring on each channel based on the channel parameter of each channel includes: obtaining, by the first electronic device, a channel rate of each channel within the second preset time through calculation based on the channel duty cycle and the channel RSSI of each of the plurality of channels; filtering, by the first electronic device, the channel rate of each channel within the second preset time based on a preset filtering algorithm, to obtain a channel rate of each channel; and performing, by the first electronic device, channel scoring on each channel based on the channel rate of each channel, where the channel rate is positively correlated with the channel score.

Based on the technical solution, the first electronic device may obtain the channel rate of the channel within the second preset time through calculation based on the channel duty cycle and the channel RSSI, and perform channel scoring based on the channel rate obtained after the filtering.

In a possible implementation, the second electronic device establishes a wireless communication link to each of the first electronic device and a third electronic device on the first channel, and the anti-interference method for wireless communication further includes: when the first electronic device receives no channel switching frame sent by the second electronic device and the third electronic device receives the channel switching frame sent by the second electronic device, switching, by the first electronic device, from the first channel to a channel having a highest channel score after a communication link between the first electronic device and the second electronic device is disconnected for preset duration.

Based on the technical solution, in a scenario in which a plurality of devices establish a link, when the first electronic device receives no channel switching frame sent by the second electronic device and the third electronic device receives the channel switching frame sent by the second electronic device, the first electronic device may switch, by using a remedy, from the first channel to the channel having the highest channel score, so that the first to third electronic devices can switch to the channel having the positive gain for communication.

In a possible implementation, the first electronic device is a group client (GC) device, and the second electronic device is a group owner (GO) device.

According to a third aspect, an embodiment of this application provides a computer readable storage medium, including computer instructions. When the computer instructions run on an electronic device, the electronic device is enabled to perform the anti-interference method for wireless communication according to the first aspect or the second aspect.

According to a fourth aspect, an embodiment of this application provides an electronic device, where the electronic device includes a processor and a memory, the memory is configured to store instructions, and the processor is configured to invoke the instructions in the memory, so that the electronic device performs the anti-interference method for wireless communication according to the first aspect or the second aspect.

According to a fifth aspect, an embodiment of this application provides a computer program product. When the computer program product runs on a computer, the computer is enabled to perform the anti-interference method for wireless communication according to the first aspect or the second aspect.

According to a sixth aspect, an embodiment of this application provides a chip, coupled to a memory in an electronic device, where the chip is configured to control the electronic device to perform the anti-interference method for wireless communication according to the first aspect or the second aspect.

It may be understood that the foregoing provided computer readable storage medium according to the third aspect, the electronic device according to the fourth aspect, the computer program product according to the fifth aspect, and the chip according to the sixth aspect all correspond to the method according to the first aspect or the second aspect. Therefore, for beneficial effects that can be achieved by the computer readable storage medium, the electronic device, the computer program product, and the chip, refer to the beneficial effects in the corresponding method provided above. Details are not described herein again.

### BRIEF DESCRIPTION OF THE DRAWINGS

FIG. 1 is a schematic diagram of an application scenario of an anti-interference method for wireless communication according to an embodiment of this application;
FIG. 2 is a schematic flowchart of an anti-interference method for wireless communication according to an embodiment of this application;
FIG. 3 is a schematic flowchart of an anti-interference method for wireless communication according to another embodiment of this application;
FIG. 4 is a schematic diagram of an application scenario of an anti-interference method for wireless communication according to another embodiment of this application;
FIG. 5 is a schematic flowchart of an anti-interference method for wireless communication according to still another embodiment of this application;
FIG. 6a is a schematic diagram of performing state switching by a non-master device according to an embodiment of this application;
FIG. 6b is a schematic diagram of performing state switching by a master device according to an embodiment of this application;
FIG. 7 is a schematic flowchart of performing channel switching by a first electronic device, a second electronic device, and a fourth electronic device according to an embodiment of this application;
FIG. 8 is a schematic sequence diagram of performing a channel switching procedure by a first electronic device, a second electronic device, and a fourth electronic device according to an embodiment of this application;
FIG. 9 is a schematic diagram of a possible structure of a first electronic device according to an embodiment of this application; and
FIG. 10 is a schematic diagram of a possible structure of a second electronic device according to an embodiment of this application.

### DESCRIPTION OF EMBODIMENTS

It should be noted that in this application, "at least one" means one or more, and "a plurality of" means two or more. "And/Or" describes an association relationship between associated objects and represents that three relationships may exist. For example, A and/or B may represent the following cases: Only A exists, both A and B exist, and only B exists, where A and B may be singular or plural. In this specification, claims, and the foregoing accompanying drawings of this application, terms "first", "second", "third", "fourth", and the like (if present) are intended to distinguish between similar objects, but are not used to describe a specific order or sequence.

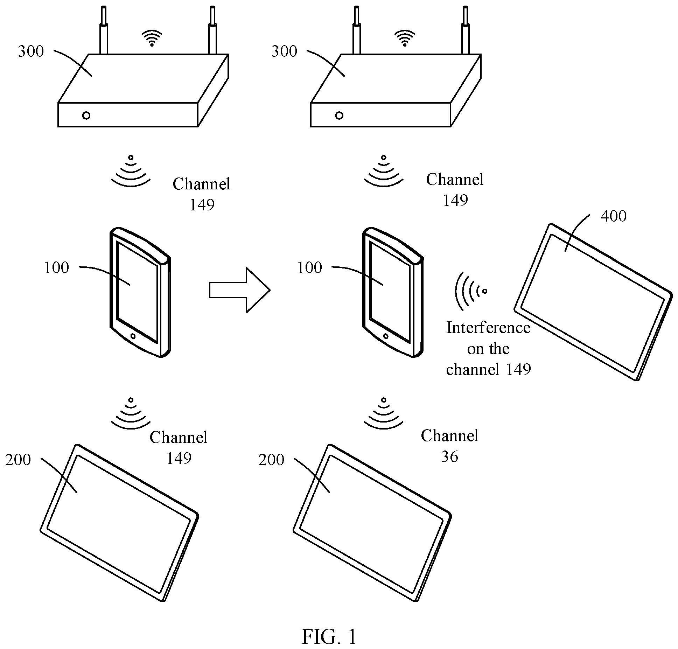

FIG. 1 is a schematic diagram of an application environment of an anti-interference method for wireless communication according to an embodiment of this application. This embodiment may be applied to a first electronic device 100 and a second electronic device 200. The first electronic device 100 may be the same as or different from the second electronic device 200. For example, the first electronic device 100 may be a mobile phone, a tablet computer, a notebook computer, or a smart television. The second electronic device 200 may be a mobile phone, a tablet computer, a notebook computer, a smart television, or the like. In FIG. 1, an example in which the first electronic device 100 is a mobile phone and the second electronic device 200 is a tablet computer is used for description.

For example, an access point 300 is a wireless router, and the first electronic device 100 establishes a link to the access point 300. In other words, the first electronic device 100 accesses a Wi-Fi network. The first electronic device 100 also establishes a link to the second electronic device 200. For example, Wi-Fi direct (Wi-Fi Direct), wireless projection, or Huawei Share OneHop (for example, Huawei Share) is performed between the first electronic device 100 and the second electronic device 200. The first electronic device 100, the second electronic device 200, and the access point 300 are in an intra-frequency co-channel scenario. When the first electronic device 100 is linked to the second electronic device 200, master election may be performed, to determine that one party is a group owner (GO) device and the other party is a group client (GC) device. The GC device may be connected to the GO device as if it were connected to an AP. The GO device and the GC device may be not only one-to-one, but also one-to-many. Like an AP, the GO device may provide a service for several GC devices. The GO device may alternatively be connected to an AP. A master election rule may be an existing election rule. For example, a device with a higher quantity of electricity is elected as a master (GO device), and a device with a quantity of electricity lower than that of the master is elected as a non-master (GC device).

In some embodiments, the first electronic device 100 and the second electronic device 200 may be connected to a same Wi-Fi network, or the first electronic device 100 and the second electronic device 200 may be connected to different Wi-Fi networks.

For example, the first electronic device 100 is a mobile phone, and the second electronic device 200 is a tablet computer. Compared with the first electronic device 100, the second electronic device 200 has a higher quantity of electricity. After master election is performed on the first electronic device 100 and the second electronic device 200, the first electronic device 100 is a GC device, and the second electronic device 200 is a GO device. The second electronic device 200 may have a function of an AP, and the second electronic device 200 may be connected to one or more GC devices. Channels that may be selected by the first electronic device 100 and the access point 300 include a channel 36, a channel 149, a channel 157, and the like, and channels that may be selected by the first electronic device 100 and the second electronic device 200 include a channel 36, a channel 149, a channel 157, and the like.

It is assumed that a channel between the first electronic device 100 and the access point 300 is the channel 149, and a channel between the first electronic device 100 and the second electronic device 200 is also the channel 149. The first electronic device 100 is connected to a wireless router to access the Internet, and the first electronic device 100 is simultaneously connected to the second electronic device 200 by using Wi-Fi direct, to project desktop content on a screen of the second electronic device 200 by using Wi-Fi direct. When interference (such as adjacent-channel interference or co-channel interference) exists on the channel 149, for example, the interference is caused by a third electronic device 400 (such as another wireless router or electronic device), because the channel of the access point 300 is preset by a user, the access point 300 cannot automatically change the channel. Even if the first electronic device 100 perceives the interference, the channel between the first electronic device 100 and the access point 300 is not changed. For a channel between the first electronic device 100 and the second electronic device 200, when the first electronic device 100 and/or the second electronic device 200 perceives the interference, on a premise that data communication performance does not deteriorate, the first electronic device 100 and the second electronic device 200 may switch to another channel with little interference or without interference, for example, the channel 36 without interference, and the first electronic device 100 and the second electronic device 200 switch to the channel 36 for communication.

For example, interference strength of the channel 149 is -53 dBm. A channel rate between the first electronic device 100 and the second electronic device 200 may be obtained by performing a BE flow TCP packet injection test on bandwidths (20 M, 40 M, and 80 M) at different rates, as shown in Table 1 below.

**Table 1**

| | 20 M | 40 M | 80 M |
|---|---|---|---|
| Switch to the channel 36 | 225 Mbps | 449 Mbps | 902 Mbps |
| Stay on the channel 149 | 70 Mbps | 60 Mbps | 258 Mbps |

It can be learned from the foregoing Table 1 that, when channel interference is detected, after the first electronic device 100 and the second electronic device 200 perform channel switching, the channel rate is obviously improved compared with staying on an original channel.

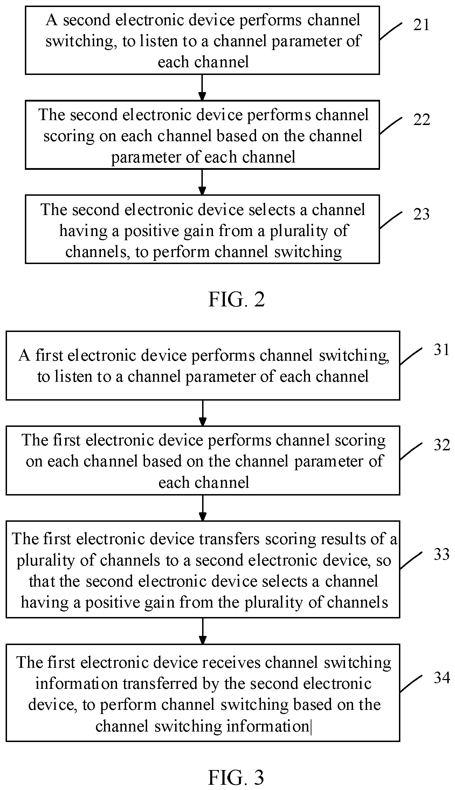

FIG. 2 is a schematic flowchart of an anti-interference method for wireless communication according to an embodiment of this application. A first electronic device 100 may communicate with a second electronic device 200 on a plurality of channels. It is assumed that in an initial state, the first electronic device 100 communicates with an access point 300 on a first channel of the plurality of channels, the first electronic device 100 also communicates with the second electronic device 200 on the first channel, and the first electronic device 100 and the second electronic device 200 are not peer roles. For example, the first electronic device 100 is a GC device, and the second electronic device 200 is a GO device. In this embodiment, the anti-interference method for wireless communication may be applied to the second electronic device 200, and the anti-interference method for wireless communication may include the following steps.

Step 21: The second electronic device 200 performs channel switching, and listens to a channel parameter of each channel.

In some embodiments, the second electronic device 200 may switch to another channel every a first preset time to perform listening for a second preset time. The first preset time and the second preset time may be set based on an actual requirement. For example, the first preset time is 3s, and the second preset time is 15 ms. The second electronic device 200 switches to another channel every 3s to perform channel scanning for 15 ms, so that the channel parameter of each channel can be obtained through listening. The channel parameter may include a channel duty cycle, a received signal strength indicator (Received Signal Strength Indicator, RSSI), and the like.

Step 22: The second electronic device 200 performs channel scoring on each channel based on the channel parameter of each channel.

In some embodiments, the second electronic device 200 may obtain a channel rate of a channel through conversion based on a channel parameter of the channel, and then perform channel scoring on the channel based on the channel rate. For example, for a channel CH 1 of the plurality of channels, the second electronic device 200 calculates a channel rate within current 15 ms based on a channel duty cycle and an RSSI within 15 ms, and then performs 1/4 alpha filtering on the channel rate within the current 15 ms, to obtain a channel rate of the channel CH 1. That is, the channel rate of the channel CH 1 may be calculated by using the following formula: V = 1/4 × Vᵢ₋₁ + 3/4Vᵢ, where V is the channel rate of the channel CH 1, Vᵢ is the channel rate of the channel CH 1 within the current 15 ms, and Vi-i is a channel rate of the channel CH 1 within previous 15 ms of listening. The second electronic device 200 may perform channel scoring on each channel by using a preset scoring rule. The preset scoring rule may include: A larger channel rate indicates a higher score obtained by scoring the channel by the second electronic device 200; or better quality of experience (Quality of Experience, QoE) of a user at the channel rate of the channel indicates a higher score obtained by scoring the channel by the second electronic device 200. For example, an operation (a multiplication operation or a division operation) is performed on the channel rate and a preset coefficient to obtain a score of the channel, or the channel rate is entered into a preset formula to obtain a score of the channel.

In some embodiments, the second electronic device 200 may further obtain the channel rate of the channel CH 1 by using a filtering method in another form. For example, 1/2 alpha filtering or 3/4 alpha filtering is performed on the channel rate within the current 15 ms, to obtain the channel rate of the CH 1.

In some embodiments, the channel rate within the current 15 ms may be obtained through calculation by using an existing channel rate calculation method. For example, a channel rate of the RSSI without interference is measured, and then rate conversion is performed based on a channel duty cycle, to obtain a channel rate corresponding to the RSSI in the channel duty cycle. For example, if a channel rate of the RSSI without interference is V1, and a channel duty cycle is 50%, the second electronic device 200 may obtain, through calculation, that the channel rate within the current 15 ms is 0.5×V1.

Step 23: The second electronic device 200 selects a channel having a positive gain from the plurality of channels, to perform channel switching.

In some embodiments, when the second electronic device 200 is in a preset service scenario, the second electronic device 200 may select the channel having the positive gain from the plurality of channels, to perform channel switching. The preset service scenario may be set based on an actual requirement. For example, the preset service scenario may include that a service currently running on the second electronic device 200 is a service (video content projection, game image projection, or the like) with a low-latency requirement, or that the second electronic device 200 performs file transmission to the first electronic device 100.

In some embodiments, the positive gain may indicate that after the second electronic device 200 switches from a current channel CHᵢ to another channel CHⱼ, a latency is lower than that of the current channel CHᵢ, or data transmission can be completed more quickly, and a data transmission rate is higher than that of the current channel CHᵢ. The opposite is true to a negative gain. If a negative gain is generated when the second electronic device 200 switches from the current channel CHᵢ to the another channel CHⱼ, the second electronic device 200 does not switch from the current channel CHᵢ to the channel CHⱼ.

In some embodiments, the second electronic device 200 switches from the current channel CHᵢ to the another channel CHⱼ to perform file transmission. After the file transmission is completed, the second electronic device 200 may further switch back to an original channel again, that is, the second electronic device 200 switches back from the channel CHⱼ to the channel CHᵢ.

In some embodiments, when the second electronic device 200 detects channel interference on a current channel, the second electronic device 200 may select the channel having the positive gain from the plurality of channels, to perform channel switching. For example, the second electronic device 200 may detect an air interface latency (an air interface latency of communication between the second electronic device 20 and the first electronic device 100 on the current channel), to determine whether channel interference exists on the current channel. If the air interface latency is greater than a preset time, the second electronic device 200 may determine that channel interference exists on the current channel.

In some embodiments, a channel whose channel score is greater than that of the current channel may be considered as the channel having the positive gain. The second electronic device 200 may select the channel having the positive gain from a channel whose score is higher than the current channel score. When there are a plurality of channels having positive gains, the second electronic device 200 may select a channel with a highest channel score from the channels as a target channel, to perform channel switching. In another embodiment, when there are a plurality of channels having positive gains, the second electronic device 200 may alternatively and randomly select a channel from the channels as a target channel, to perform channel switching.

For example, when the second electronic device 200 detects channel interference on the current channel CHᵢ, the channel CHⱼ has a highest score, and the channel that has the positive gain and that is selected by the second electronic device 200 from the plurality of channels is the channel CHⱼ. The second electronic device 200 sends channel switching information to the first electronic device 100. When receiving the channel switching information, the first electronic device 100 may send acknowledgment character (Acknowledge Character, ACK) information to the second electronic device 200. When receiving the ACK information, the second electronic device 200 may switch from the current channel CHᵢ to the channel CHⱼ.

For example, a channel on which the second electronic device 200 establishes a link to the first electronic device 100 is CHᵢ, the channel CHⱼ has a highest score, and the first electronic device 100 and the second electronic device 200 switch from the current channel CHᵢ to the channel CHⱼ to perform file transmission. For a channel with a high rate but a latency jitter, after the file transmission is completed, the second electronic device 200 may further send channel switching information to the first electronic device 100, so that the first electronic device 100 switches back from the channel CHⱼ to the channel CHᵢ. When receiving the channel switching information, the first electronic device 100 may send ACK information to the second electronic device 200. When receiving the ACK information, the second electronic device 200 may switch back from the channel CHⱼ to the channel CHᵢ.

FIG. 3 is a schematic flowchart of an anti-interference method for wireless communication according to an embodiment of this application. A first electronic device 100 may communicate with a second electronic device 200 on a plurality of channels. In an initial state, the first electronic device 100 communicates with an access point 300 on a first channel of the plurality of channels, and the first electronic device 100 also communicates with the second electronic device 200 on the first channel. For example, the first electronic device 100 is a GC device, and the second electronic device 200 is a GO device. In this embodiment, the anti-interference method for wireless communication may be applied to the first electronic device 100, and the anti-interference method for wireless communication may include the following steps.

Step 31: The first electronic device 100 performs channel switching, and listens to a channel parameter of each channel.

In some embodiments, the first electronic device 100 may switch to another channel every a first preset time to perform listening for a second preset time. The first preset time and the second preset time may be set based on an actual requirement. For example, the first preset time is 3s, and the second preset time is 15 ms. The first electronic device 100 performs, every 3s, channel scanning for 15 ms, to obtain a channel parameter of a channel through listening. The channel parameter may include a channel duty cycle, a received signal strength indicator (Received Signal Strength Indicator, RSSI), and the like. For example, the first electronic device 100 may sequentially perform, every 3s, channel scanning for 15 ms on each channel in a channel list of a country code based on the channel list, to obtain a channel parameter of each channel through listening.

Step 32: The first electronic device 100 performs channel scoring on each channel based on the channel parameter of each channel.

In some embodiments, the first electronic device 100 may obtain a channel rate of a channel through conversion based on a channel parameter of the channel, and then perform channel scoring on the channel based on the channel rate. For example, for a channel CH 1 of a plurality of channels, the first electronic device 100 calculates a channel rate of the channel CH 1 within current 15 ms based on a channel duty cycle and an RSSI within 15 ms, and then performs 1/4 alpha filtering on the channel rate within the current 15 ms, to obtain a channel rate of the channel CH 1.

In some embodiments, the first electronic device 100 may further obtain the channel rate of the channel CH 1 by using a filtering method in another form. For example, 1/2 alpha filtering or 3/4 alpha filtering is performed on the channel rate within the current 15 ms, to obtain the channel rate of the CH 1.

Step 33: The first electronic device 100 transfers scoring results of the plurality of channels to the second electronic device 200, so that the second electronic device 200 selects the channel having the positive gain from the plurality of channels.

In some embodiments, when the first electronic device 100 obtains the scoring result of each channel, the first electronic device 100 may summarize the scoring result of each channel and transfer the scoring result to the second electronic device 200, so that the second electronic device 200 may select the channel having the positive gain from the plurality of channels based on the channel scoring result, to implement channel switching.

In some embodiments, the second electronic device 200 may perform channel scoring on each channel, or may not perform channel scoring, that is, receive only the channel scoring result sent by the first electronic device 100.

Step 34: The first electronic device 100 receives channel switching information transferred by the second electronic device 200, to perform channel switching based on the channel switching information.

In some embodiments, when the second electronic device 200 selects a target channel (for example, the channel CHⱼ) from the plurality of channels, the second electronic device 200 may transfer channel switching information to the first electronic device 100. The channel switching information may include a channel switching action frame. The first electronic device 100 may perform channel switching in response to the channel switching information.

In some embodiments, when receiving the channel switching information, the first electronic device 100 may send ACK information to the second electronic device 200, and the second electronic device 200 may perform channel switching when receiving the ACK information, so that both the first electronic device 100 and the second electronic device 200 can switch to a same channel again for communication.

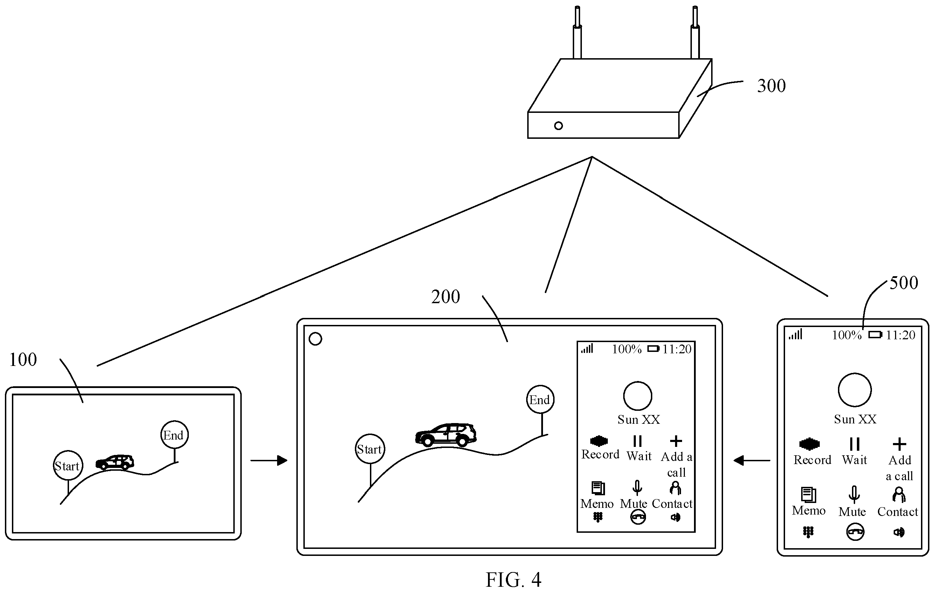

FIG. 4 is a schematic diagram of an application environment of an anti-interference method for wireless communication according to an embodiment of this application. This embodiment may be applied to a first electronic device 100, a second electronic device 200, and a fourth electronic device 500. The first electronic device 100, the second electronic device 200, and the fourth electronic device 500 may be the same or different. For example, the first electronic device 100 may be a mobile phone, a tablet computer, a notebook computer, or a smart television. The second electronic device 200 may be a mobile phone, a tablet computer, a notebook computer, a smart television, or the like. The fourth electronic device 500 may be a mobile phone, a tablet computer, a notebook computer, a smart television, or the like. In FIG. 4, an example in which the first electronic device 100 is a mobile phone, the second electronic device 200 is a tablet computer, and the fourth electronic device 500 is a mobile phone is used for description.

For example, each of the first electronic device 100, the second electronic device 200, and the fourth electronic device 500 establishes a link to an access point 300, that is, the first electronic device 100, the second electronic device 200, and the fourth electronic device 500 access a same Wi-Fi network. The first electronic device 100 also establishes a link to the second electronic device 200, and the fourth electronic device 500 establishes a link to the second electronic device 200. For example, the first electronic device 100 is projected to the second electronic device 200 through multi-screen collaboration, and the fourth electronic device 500 is projected to the second electronic device 200 through wireless projection. The first electronic device 100, the second electronic device 200, and the fourth electronic device 500 form a many-to-one projection scenario.

In some embodiments, alternatively, the first electronic device 100, the second electronic device 200, and the fourth electronic device 500 may not be connected to a same Wi-Fi network.

Compared with the first electronic device 100 and the fourth electronic device 500, the second electronic device 200 has a higher quantity of electricity. After master election is performed between devices, the first electronic device 100 and the fourth electronic device 500 are GC devices, and the second electronic device 200 is a GO device. For example, the first electronic device 100, the second electronic device 200, and the fourth electronic device 500 are all connected to the access point 300 on a channel 36. The first electronic device 100 and the second electronic device 200 perform multi-screen collaboration, and perform communication by using the channel 36. The fourth electronic device 500 and the second electronic device 200 perform wireless projection, and also perform communication by using the channel 36.

The second electronic device 200, the first electronic device 100, and the fourth electronic device 500 may perform interference detection in a service process. When the interference is perceived, on a premise that data communication performance does not deteriorate, the first electronic device 100, the fourth electronic device 500, and the second electronic device 200 may switch to another channel having a positive gain. For example, a channel 44 has a positive gain, the first electronic device 100 and the second electronic device 200 switch to the channel 44 for communication, and the fourth electronic device 500 also switches to the channel 44 to communicate with the second electronic device 200.

For example, the second electronic device 200 calculates a channel switching gain, and selects, from a plurality of channels, a channel having a positive gain, to perform channel switching. The second electronic device 200 may send an action frame to the first electronic device 100 and the fourth electronic device 500, so that the first electronic device 100 and the fourth electronic device 500 may perform channel switching. The second electronic device 200 may perform channel switching when receiving ACK information transferred by the first electronic device 100 and/or the fourth electronic device 500.

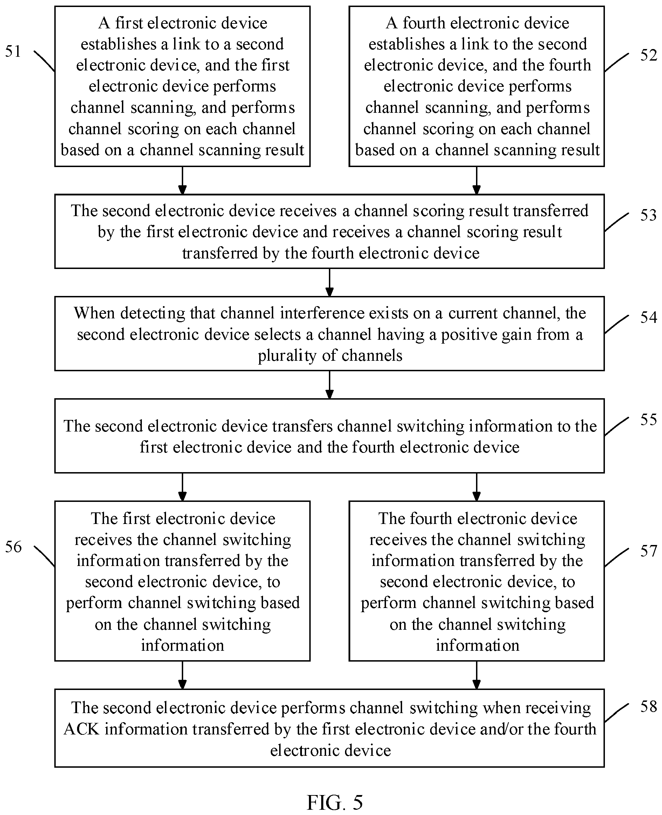

FIG. 5 is a schematic flowchart of an anti-interference method for wireless communication according to an embodiment of this application. A first electronic device 100 and a fourth electronic device 500 may communicate with a second electronic device 200 on a plurality of channels. The first electronic device 100 and the fourth electronic device 500 are GC devices, and the second electronic device 200 is a GO device. In this embodiment, the anti-interference method for wireless communication may include the following steps.

Step 51: The first electronic device 100 establishes a link to the second electronic device 200, and the first electronic device 100 performs channel scanning, and performs channel scoring on each channel based on a channel scanning result.

In some embodiments, for example, the first electronic device 100, the second electronic device 200, and the fourth electronic device 500 are all connected to an access point 300 on a channel 36, and the first electronic device 100 establishes a link to the second electronic device 200 on the channel 36. When the first electronic device 100 establishes a link to the second electronic device 200, the first electronic device 100 may perform full-channel scanning once to listen to a channel parameter of each channel, so that channel scoring can be performed on each channel based on the channel parameter of each channel. For example, when the first electronic device 100 establishes a link to the second electronic device 200, the first electronic device 100 may scan each channel for specific duration based on a channel list of a country code to obtain a channel parameter, and perform channel scoring based on the channel parameter of each channel. A channel scoring result may be stored in the channel list.

For example, channels of a Wi-Fi 20 M frequency band include a channel 36, a channel 40, a channel 44, a channel 48, a channel 149, a channel 153, a channel 157, a channel 161, and a channel 165. The first electronic device 100 may perform full-channel scanning and channel scoring, to obtain a scoring result of the channel 36, a scoring result of the channel 40, a scoring result of the channel 44, a scoring result of the channel 48, a scoring result of the channel 149, a scoring result of the channel 153, a scoring result of the channel 157, a scoring result of the channel 161, and a scoring result of the channel 165.

In some embodiments, after the first electronic device 100 establishes a link to the second electronic device 200, the first electronic device 100 may further perform channel scanning once every a first preset time. For example, the first electronic device 100 performs, every 3s, channel scanning for 15 ms on a channel until the channel parameter of each channel is obtained through listening. The first electronic device 100 may obtain a channel rate of the channel through conversion based on the channel parameter of each channel, and then perform channel scoring on each channel based on the channel rate. The first electronic device 100 may update an existing channel score in the channel list based on the current channel scoring result.

Step 52: The fourth electronic device 500 establishes a link to the second electronic device 200, and the fourth electronic device 500 performs channel scanning, and performs channel scoring on each channel based on a channel scanning result.

In some embodiments, the fourth electronic device 500 establishes a link to the second electronic device 200 on the channel 36. When the fourth electronic device 500 establishes a link to the second electronic device 200, the fourth electronic device 500 may perform full-channel scanning once, to listen to the channel parameter of each channel, so that channel scoring can be performed on each channel based on the channel parameter of each channel.

In some embodiments, after the fourth electronic device 500 establishes a link to the second electronic device 200, the fourth electronic device 500 may further perform channel scanning once every the first preset time. For example, the fourth electronic device 500 may perform, every 3s, channel scanning for 15 ms on one channel, to obtain the channel parameter of each channel through listening. The fourth electronic device 500 may update an existing channel score in the channel list based on a current channel scoring result.

Step 53: The second electronic device 200 receives the channel scoring result transferred by the first electronic device 100 and receives the channel scoring result transferred by the fourth electronic device 500.

In some embodiments, when the first electronic device 100 completes full-channel scoring once, the first electronic device 100 may transfer the channel scoring result to the second electronic device 200. When the fourth electronic device 500 completes full-channel scoring once, the fourth electronic device 500 may transfer the channel scoring result to the second electronic device 200. For example, the first electronic device 100 and the fourth electronic device 500 may send a QoE action frame to the second electronic device 200, and the QoE action frame includes the channel scoring result. The second electronic device 200 may summarize the channel scoring result transferred by the first electronic device 100 and the channel scoring result transferred by the fourth electronic device 500, to obtain a final scoring result (for example, Radio Resource Management List, RRMList) of each channel. The RRMList obtained by the second electronic device 200 through summarization may be transferred back to the first electronic device 100 and the fourth electronic device 500. For example, the second electronic device 200 may perform an average value operation on the channel scoring result transferred by the first electronic device 100 and the channel scoring result transferred by the fourth electronic device 500, to obtain the final scoring result of each channel. For example, if a scoring result of a channel CHᵢ by the first electronic device 100 is 7, and a scoring result of a channel CHᵢ by the fourth electronic device 500 is 7.2, the second electronic device 200 may obtain a final scoring result of the channel CHᵢ as 7. 1.

In some embodiments, the second electronic device 200 may alternatively perform full-channel scanning and scoring. In this case, the second electronic device 200 may summarize the channel scoring result of the second electronic device 200, the channel scoring result transferred by the first electronic device 100, and the channel scoring result transferred by the fourth electronic device 500, to obtain the final scoring result of each channel.

Step 54: When detecting that channel interference exists on a current channel, the second electronic device 200 selects a channel having a positive gain from the plurality of channels.

In some embodiments, it is assumed that the current channel is the channel 36, and when the second electronic device 200 detects that channel interference exists on the channel 36, the first electronic device 100 may select the channel having the positive gain from the channel list, to perform channel switching. For example, the second electronic device 200 may select the channel having the positive gain from a channel whose score is higher than that of the channel 36. When there are a plurality of channels having positive gains, the second electronic device 200 may select a channel with a highest channel score from the plurality of channels as a target channel, to perform channel switching.

In some embodiments, when there are a plurality of channels having positive gains, the second electronic device 200 may alternatively and randomly select a channel from the plurality of channels as a target channel, to perform channel switching.

Step 55: The second electronic device 200 transfers channel switching information to the first electronic device 100 and the fourth electronic device 500.

In some embodiments, for example, the second electronic device 200 selects the channel having the positive gain from the plurality of channels as the channel 44, and the second electronic device 200 may transfer channel switching information to the first electronic device 100 and the fourth electronic device 500, to indicate the first electronic device 100 and the fourth electronic device 500 to switch from the channel 36 to the channel 44.

Step 56: The first electronic device 100 receives the channel switching information transferred by the second electronic device 200, to perform channel switching based on the channel switching information.

Step 57: The fourth electronic device 500 receives the channel switching information transferred by the second electronic device 200, to perform channel switching based on the channel switching information.

In some embodiments, when the first electronic device 100 receives the channel switching information transferred by the second electronic device 200, the first electronic device 100 may switch from the channel 36 to the channel 44 in response to the channel switching information. When the fourth electronic device 500 receives the channel switching information transferred by the second electronic device 200, the fourth electronic device 500 may switch from the channel 36 to the channel 44 in response to the channel switching information.

In some embodiments, when receiving the channel switching information transferred by the second electronic device 200, the first electronic device 100 transfers ACK information back to the second electronic device 200. When receiving the channel switching information transferred by the second electronic device 200, the fourth electronic device 500 transfers ACK information back to the second electronic device 200.

Step 58: The second electronic device 200 performs channel switching when receiving the ACK information transferred by the first electronic device 100 and/or the fourth electronic device 500.

In some embodiments, when the second electronic device 200 receives the ACK information transferred by the first electronic device 100 and/or the fourth electronic device 500, the second electronic device 200 performs channel switching, that is, switching from the channel 36 to the channel 44.

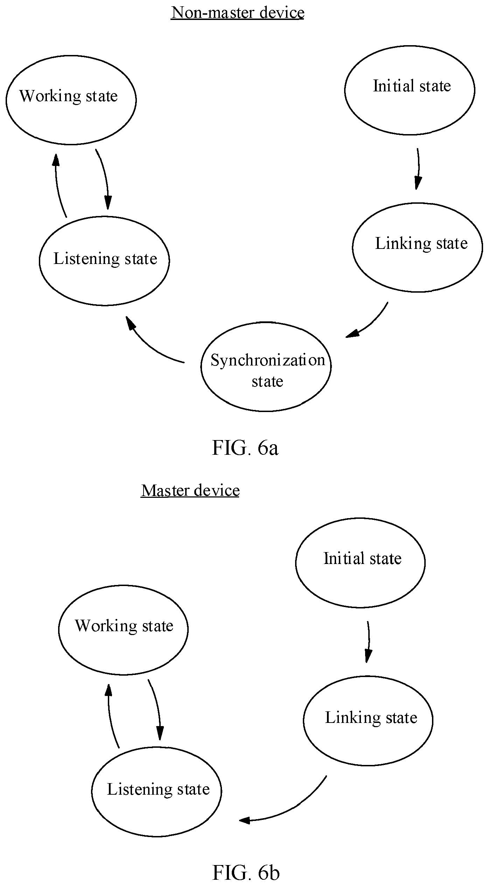

As shown in FIG. 6a, for example, the first electronic device 100 and the fourth electronic device 500 are non-master devices (GC devices), and each of the first electronic device 100 and the fourth electronic device 500 may include five states: an initial state, a linking state, a synchronization state, a listening state, and a working state. As shown in FIG. 6b, the second electronic device 200 is a master device (GO device), and the second electronic device 200 may include four states: an initial state, a linking state, a listening state, and a working state. The initial state may be that an electronic device has not established a link to another electronic device. The linking state may be that an electronic device has established a link to another electronic device. The synchronization state may be that an electronic device performs time synchronization with a master device that establishes a link to the electronic device. The listening state may be that an electronic device switches to a common channel to listen to data sent by an electronic device that establishes a link to the electronic device. The working state may be that an electronic device performs channel scanning or interference detection, to start channel switching. When a non-master device performs a channel switching procedure, after the initial state, the linking state, and the synchronization state are performed, the non-master device switches between the listening state and the working state. When a master device performs a channel switching procedure, after the initial state and the linking state are performed, the master device also switches between the listening state and the working state, so that when channel interference is detected, the master device can quickly switch to a channel with less interference.

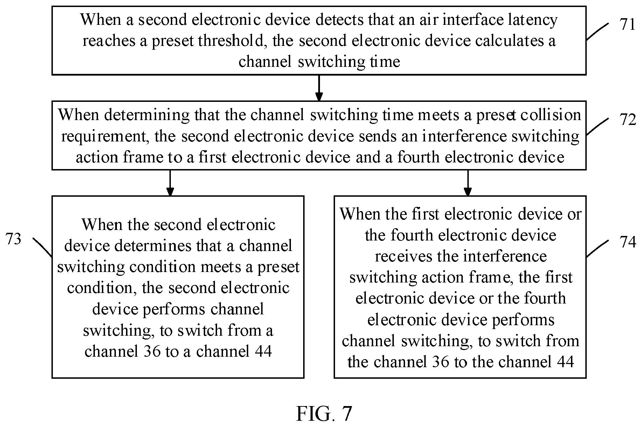

FIG. 7 is a schematic flowchart of performing channel switching by a first electronic device 100, a second electronic device 200, and a fourth electronic device 500 according to an embodiment of this application. An example in which the first electronic device 100 initially communicates with the second electronic device 200 on a channel 36, the fourth electronic device 500 initially communicates with the second electronic device 200 on the channel 36, and the first electronic device 100, the second electronic device 200, and the fourth electronic device 500 switch from the channel 36 to a channel 44 having a positive gain is used for description.

Step 71: When the second electronic device 200 detects that an air interface latency reaches a preset threshold, the second electronic device 200 calculates a channel switching time.

In some embodiments, when the second electronic device 200 detects that the air interface latency for performing data communication with the first electronic device 100 or the fourth electronic device 500 reaches (is greater than or equal to) the preset threshold, the second electronic device 200 may determine that channel interference exists on the channel 36. It is assumed that the channel 44 is a channel that has a positive gain and that is selected by the second electronic device 200. After determining the channel having the positive gain, the second electronic device 200 may calculate a channel switching time.

In some embodiments, the second electronic device 200 detects the air interface latency in a working state, and the channel switching time may be duration between a time node at which the second electronic device 200 detects that the air interface latency reaches the preset threshold and a time node of entering a listening state next time.

Step 72: When determining that the channel switching time meets a preset collision requirement, the second electronic device 200 sends an interference switching action frame to the first electronic device 100 and the fourth electronic device 500.

In some embodiments, the preset collision requirement may be set based on an actual requirement. For example, the preset collision requirement is that the channel switching time is greater than 10 ms. That is, when the second electronic device 200 detects that the duration from the time node at which the air interface latency reaches the preset threshold to the time node of entering the listening state next time is greater than 10 ms, the second electronic device 200 sends the interference switching action frame to the first electronic device 100 and the fourth electronic device 500. Alternatively, when the second electronic device 200 detects that the duration from the time node at which the air interface latency reaches the preset threshold to the time node of entering the listening state next time is less than or equal to 10 ms, the second electronic device 200 does not send the interference switching action frame to the first electronic device 100 and the fourth electronic device 500. When determining that the channel switching time does not meet the preset collision requirement, the second electronic device 200 may jump to step 71.

Step 73: When the second electronic device 200 determines that a channel switching condition meets a preset condition, the second electronic device 200 performs channel switching, to switch from the channel 36 to the channel 44.

In some embodiments, both the first electronic device 100 and the fourth electronic device 500 transfer ACK information back to the second electronic device 200 when receiving the interference switching action frame. The preset condition may be that the second electronic device 200 receives the ACK information transferred by the first electronic device 100 and/or the fourth electronic device 500. When determining that the channel switching condition does not meet the preset condition, the second electronic device 200 may jump to step 71. That is, when the second electronic device 200 receives no ACK information, the second electronic device 200 does not perform channel switching.

74: When the first electronic device 100 or the fourth electronic device 500 receives the interference switching action frame, the first electronic device 100 or the fourth electronic device 500 performs channel switching, to switch from the channel 36 to the channel 44.

In some embodiments, when the first electronic device 100 receives the interference switching action frame, the first electronic device 100 performs channel switching, to switch from the channel 36 to the channel 44. When the fourth electronic device 500 receives the interference switching action frame, the fourth electronic device 500 performs channel switching, that is, switching from the channel 36 to the channel 44.

In some embodiments, when the first electronic device 100 or the fourth electronic device 500 receives no interference switching action frame, the first electronic device 100 or the fourth electronic device 500 may attempt to perform a channel switching remedy. The channel switching remedy generally occurs when the first electronic device 100 receives the interference switching action frame, but the fourth electronic device 500 receives no interference switching action frame, or when the first electronic device 100 receives no interference switching action frame, but the fourth electronic device 500 receives the interference switching action frame. In a case in which neither the first electronic device 100 nor the fourth electronic device 500 receives the interference switching action frame, because the second electronic device 200 cannot receive ACK information, the second electronic device 200 does not perform channel switching, and it is meaningless for the first electronic device 100 and/or the fourth electronic device 500 to perform the channel switching remedy.

In some embodiments, the channel that has the positive gain and that is selected by the second electronic device 200 is a channel with a highest channel score. If the first electronic device 100 receives the interference switching action frame, and the fourth electronic device 500 receives no interference switching action frame, the fourth electronic device 500 may automatically switch to the channel with the highest channel score after channel communication between the fourth electronic device 500 and the second electronic device 200 is interrupted for preset duration, to communicate with the second electronic device 200. If the first electronic device 100 receives no interference switching action frame, and the fourth electronic device 500 receives the interference switching action frame, the first electronic device 100 may automatically switch to the channel with the highest channel score after channel communication between the fourth electronic device 500 and the second electronic device 200 is interrupted for preset duration, to communicate with the second electronic device 200.

In some embodiments, the first electronic device 100, the second electronic device 200, and the fourth electronic device 500 work on a common channel in the listening state, and the common channel may be specified in advance. If the first electronic device 100 receives the interference switching action frame, and the fourth electronic device 500 receives no interference switching action frame, causing interruption of channel communication with the second electronic device 200, the fourth electronic device 500 may further receive a broadcast message of the second electronic device 200 in the listening state, to re-establish a communication link to the second electronic device 200. The broadcast information may include information about a channel on which the second electronic device 200 is located in the working state, and the fourth electronic device 500 may perform channel switching based on the broadcast information.

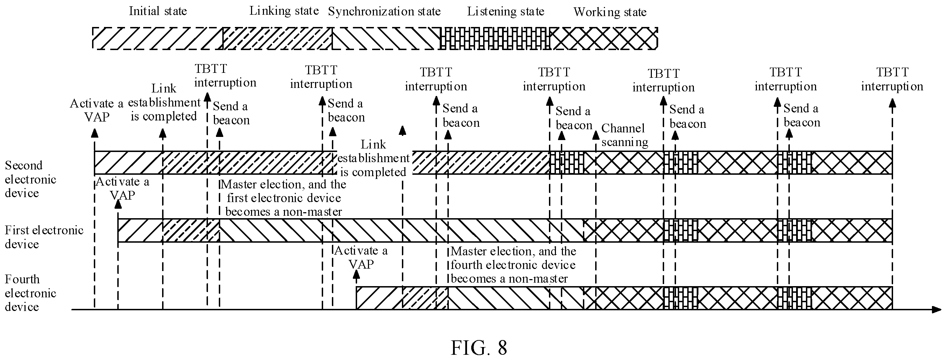

FIG. 8 is a schematic sequence diagram of performing a channel switching procedure by a first electronic device 100, a second electronic device 200, and a fourth electronic device 500 according to an embodiment of this application. It is assumed that the first electronic device 100 is a mobile phone, the second electronic device 200 is a tablet computer, and the fourth electronic device 500 is a mobile phone. An example in which the first electronic device 100 is projected to the second electronic device 200 through multi-screen collaboration, and the fourth electronic device 500 is projected to the second electronic device 200 through wireless projection is used for description.

The second electronic device 200 establishes a link to the first electronic device 100.

The second electronic device 200 starts a multi-screen collaboration application, and sends a first Bluetooth low energy (Bluetooth Low Energy, BLE) broadcast to the first electronic device 100. The first electronic device 100 may pop up a pop-up dialog box, so that a user can determine whether to connect the first electronic device 100 to the second electronic device 200. When determining to connect the first electronic device 100 to the second electronic device 200, the first electronic device 100 sends a second BLE broadcast to the second electronic device 200, and the second electronic device 200 may pop up a pop-up dialog box, so that the user can determine whether to allow the first electronic device 100 to connect to the second electronic device 200.

When it is determined that the first electronic device 100 is allowed to connect to the second electronic device 200, the second electronic device 200 creates a first virtual access point (Virtual Access Point, VAP), and sends a third BLE broadcast to the first electronic device 100. The first electronic device 100 may create a second VAP in response to the received third BLE broadcast. After the first VAP and the second VAP are activated, both the first electronic device 100 and the second electronic device 200 exist as master roles, and the first electronic device 100 and the second electronic device 200 are in an initial state.

When the second electronic device 200 establishes a link to the first electronic device 100, a state of the second electronic device 200 and a state of the first electronic device 100 switch to a linking state. When establishing a link to the first electronic device 100, the second electronic device 200 may perform synchronization at a coarse time granularity, for example, second-level time synchronization. The first electronic device 100 and the second electronic device 200 each send a beacon frame in a target beacon transmission time (Target Beacon Transmission Time, TBTT) cycle of each of the first electronic device 100 and the second electronic device 200. The beacon frame carries group description information group info IE and a timestamp, and the group info IE includes master device measurement information (Master Metric). The master device metric information is used to decide a device whose role is a master role and a device whose role is a non-master role in the two electronic devices that establish a link.

When receiving the beacon frame sent by the first electronic device 100, the second electronic device 200 may parse the master metric in the group info IE, and after comparing the master metric with master metric of the second electronic device 200, the second electronic device 200 may consider that the second electronic device 200 should continue to exist as a master device (GO device). When receiving the beacon frame sent by the second electronic device 200, the first electronic device 100 may parse the master metric in the group info IE, and after comparing the master metric with master metric of the first electronic device 100, the first electronic device 100 may consider that the first electronic device 100 should exist as a non-master device (GC device), and a role of the first electronic device 100 changes to a non-master role. The first electronic device 100 may perform time synchronization with the second electronic device 200 (for example, perform millisecond-level time synchronization) based on the timestamp carried in the received beacon frame. In this case, a state of the first electronic device 100 may switch from the linking state to a synchronization state.

Similarly, a wireless projection application may trigger the fourth electronic device 500 to create a third VAP. After the third VAP is activated, the fourth electronic device 500 exists as a master role, and the fourth electronic device 500 is in the initial state. When the second electronic device 200 establishes a link to the fourth electronic device 500, a state of the fourth electronic device 500 changes to the linking state. When establishing a link to the second electronic device 200, the fourth electronic device 500 may perform synchronization at a coarse time granularity, for example, perform second-level time synchronization. The second electronic device 200 and the fourth electronic device 500 each send a beacon frame in a TBTT cycle of each of the second electronic device 200 and the fourth electronic device 500.

When receiving the beacon frame sent by the fourth electronic device 500, the second electronic device 200 may parse master metric in group info IE, and after comparing the master metric with master metric of the second electronic device 200, the second electronic device 200 may consider that the second electronic device 200 should continue to exist as a master device. When receiving the beacon frame sent by the second electronic device 200, the fourth electronic device 500 may parse the master metric in the group info IE, and after comparing the master metric with master metric of the fourth electronic device 500, the fourth electronic device 500 may consider that the fourth electronic device 500 should exist as a non-master device, and a role of the fourth electronic device 500 changes to a non-master role. The fourth electronic device 500 may perform time synchronization with the second electronic device 200 (for example, perform millisecond-level time synchronization) based on the timestamp carried in the received beacon frame. In this case, a state of the fourth electronic device 500 may switch from the linking state to the synchronization state.

As shown in FIG. 8, when a TBTT interruption occurs on the master device (the second electronic device 200), the master device may start a timer of a preset time (for example, 24 ms) when each TBTT interruption occurs. The preset time may be set based on an actual requirement, and is not limited herein. After synchronizing with the master device, the non-master device (the first electronic device 100 and the fourth electronic device 500) may calculate, based on a time difference between the non-master device and the master device, a time at which a TBTT interruption occurs on the master device next time, and start a scheduling timer to simulate the TBTT interruption of the master device. An expiration time of the scheduling timer is the same as an occurrence time of the TBTT interruption of the master device, and after the scheduling timer expires, the timer of the preset time (24 ms) may also be started.

A sequence diagram shown in FIG. 8 is described by using a two-to-one projection scenario as an example. When completing establishment of links to two non-master devices, the master device may set a master channel field in a beacon frame to 1 after a third TBTT interruption, a state of the master device switches from the linking state to the listening state, and a listen timer of the preset time (24 ms) may be started. After receiving a beacon frame sent by the master device, the non-master device may obtain, through parsing, that the master channel field included in the beacon frame is 1. After the listen timer of the master device expires and the scheduling timer of the non-master device expires, because the master channel field is 1, the master device and the non-master device may switch the state of the master device and a state of the non-master device to the working state, to perform channel scanning. That is, as shown in FIG. 8, the master device and the non-master device may switch the state of the master device and the state of the non-master device to the working state after a fourth TBTT interruption. Channel scanning for the first time may be performed 100 ms after the device switches to the working state, and then the channel scanning may be performed every 3s. In another embodiment, in a one-to-one projection scenario, two electronic devices that establish a link may also implement channel switching in a similar sequence. A sequence diagram of the one-to-one projection scenario may be obtained by properly transforming the sequence diagram in FIG. 8 (the sequence diagram of the first electronic device 100 and the second electronic device 200 is properly transformed).

In some embodiments, in each TBTT interruption (that is, each TBTT interruption starting from a fourth TBTT interruption in FIG. 8) after the master channel is assigned a value of 1, the master device may enter the listening state, and may start the listen timer of the preset time (24 ms). After the timer of the non-master device expires, the master channel field included in the beacon frame being 1 may be obtained through parsing, and the non-master device may enter the listening state, and start the listen timer of the preset time (24 ms). The non-master device in the listening state may encapsulate and send a QoE action frame to the master device, and may parse the group info IE and an RRM list that are in the beacon frame sent by the master device. As shown in FIG. 8, the non-master device may enter the listening state during a fifth TBTT interruption.

In some embodiments, when two non-master devices both complete synchronization before the fourth TBTT interruption, the non-master device may also enter the listening state during the fourth TBTT interruption.

In the listening state, the master device may periodically send a beacon frame to the non-master device, and may receive a QoE action frame sent by the non-master device. The master device may parse the QoE action frame, to summarize scores of each channel by the non-master devices, and update the RRM List. The QoE action frame may include a scoring result of each channel.

After the listen timer of the preset time (24 ms) expires, both the master device and the non-master device may switch to the working state. The non-master device may perform channel scanning and channel scoring at a cycle of 3 s in the working state. The master device may perform interference detection based on an air interface latency for sending a data frame. When detecting interference, the master device starts a channel switching procedure.

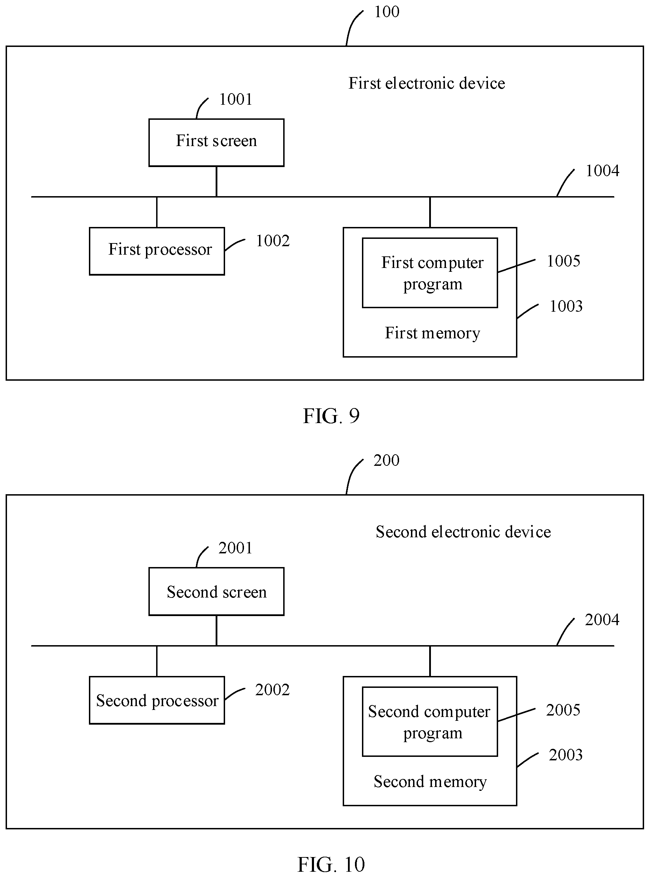

FIG. 9 is a schematic diagram of a hardware structure of a first electronic device 100 according to an embodiment of this application. As shown in FIG. 9, the first electronic device 100 may include a first screen 1001, a first processor 1002, a first memory 1003, and a first communication bus 1004. The first memory 1003 is configured to store one or more first computer programs 1005. One or more first computer programs 1005 are configured to be executed by the first processor 1002. The one or more first computer programs 1005 include instructions, and the instructions may be used to implement the anti-interference method for wireless communication shown in FIG. 3 in the first electronic device 100.

It may be understood that the structure shown in this embodiment does not constitute a specific limitation on the first electronic device 100. In some other embodiments, the first electronic device 100 may include more or fewer components than those shown in the figure, combine some components, split some components, or have different component layouts. For example, the first electronic device 100 may further include a camera.

FIG. 10 is a schematic diagram of a hardware structure of a second electronic device 200 according to an embodiment of this application. As shown in FIG. 10, the second electronic device 200 may include a second screen 2001, a second processor 2002, a second memory 2003, and a second communication bus 2004. The second memory 2003 is configured to store one or more second computer programs 2005. The one or more second computer programs 2005 are configured to be executed by the second processor 2002. The one or more second computer programs 2005 include instructions, and the instructions may be used to implement the anti-interference method for wireless communication shown in FIG. 2 in the second electronic device 200.

It may be understood that the structure shown in this embodiment does not constitute a specific limitation on the second electronic device 200. In some other embodiments, the second electronic device 200 may include more or fewer components than those shown in the figure, combine some components, split some components, or have different component layouts. For example, the second electronic device 200 may further include a camera.

Each of the first processor 1002 and the second processor 2002 may include one or more processing units. For example, the first processor 1002 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural network processing unit, NPU). Different processing units may be independent devices, or may be integrated into one or more processors.

A memory may be further disposed in each of the first processor 1002 and the second processor 2002, and is configured to store instructions and data. In some embodiments, the memory in each of the first processor 1002 and the second processor 2002 is a cache. The memory may save instructions or data that has just been used or cyclically used by the first processor 1002 (the second processor 2002). If the first processor 1002 (the second processor 2002) needs to use the instructions or the data again, the processor may directly invoke the instructions or the data from the memory. This avoids repeated access, and reduces a waiting time of the first processor 1002 (the second processor 2002), thereby increasing system efficiency.

In some embodiments, each of the first processor 1002 and the second processor 2002 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

In some embodiments, each of a first memory 1003 and a second storage area 2006 may include a high-speed random access memory, and may further include a non-volatile memory, for example, a hard disk, a memory, a plug-in hard disk, a smart media card (Smart Media Card, SMC), a secure digital (Secure Digital, SD) card, a flash card (Flash Card), at least one magnetic disk storage device, a flash memory device, or another volatile solid-state storage device.

An embodiment further provides a computer storage medium. The computer storage medium stores computer instructions. When the computer instructions run on an electronic device, the electronic device is enabled to perform the foregoing related method steps, to implement the anti-interference method for wireless communication in the foregoing embodiment.

An embodiment further provides a computer program product. When the computer program product runs on a computer, the computer is enabled to perform the foregoing related steps, to implement the anti-interference method for wireless communication in the foregoing embodiment.

In addition, an embodiment of this application further provides an apparatus. The apparatus may be specifically a chip, a component, or a module. The apparatus may include a processor and a memory that are connected. The memory is configured to store a computer executable instruction. When the apparatus is run, the processor may execute the computer executable instruction stored in the memory, so that the chip performs the anti-interference method for wireless communication in the foregoing method embodiments.

The first electronic device, the second electronic device, the computer storage medium, the computer program product, or the chip provided in the embodiment is configured to perform the corresponding method described above. Therefore, for beneficial effects that can be achieved by the first electronic device, the second electronic device, the computer storage medium, the computer program product, and the chip, refer to the beneficial effects of the corresponding methods described above. Details are not described herein again.

The foregoing description about the implementations allows a person skilled in the art to clearly understand that, for the purpose of convenient and brief description, division into only the foregoing function modules is used as an example for description. During actual application, the foregoing functions can be allocated to different function modules for implementation as required. In other words, an inner structure of an apparatus is divided into different function modules to implement all or some of the functions described above.

In the several embodiments provided in this application, it should be understood that the disclosed apparatus and method may be implemented in other manners. For example, the foregoing described apparatus embodiment is an example. For example, division into the modules or units is logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate. A component displayed as a unit may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in the embodiments of this application. The foregoing storage medium includes various media that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement within the technical scope disclosed in this application shall fall within the protection scope of this application.

## Claims

1. An anti-interference method for wireless communication, comprising:
obtaining, by a second electronic device, channel scores of a plurality of channels on which a wireless communication link can be established to a first electronic device, to select a channel having a positive gain from the plurality of channels based on the channel scores;
sending, by the second electronic device, a first channel switching frame to the first electronic device, so that the first electronic device switches from a first channel to the channel having the positive gain, wherein the first channel is a channel used by the first electronic device to currently establish a wireless communication link to the second electronic device; and
switching, by the second electronic device when the second electronic device receives an acknowledgment character transferred by the first electronic device, from the first channel to the channel having the positive gain.

2. The anti-interference method for wireless communication according to claim 1, wherein the obtaining, by a second electronic device, channel scores of a plurality of channels on which a wireless communication link can be established to a first electronic device comprises:
performing, by the second electronic device, channel switching once every a first preset time, to listen on each of the plurality of channels for a second preset time, to obtain a channel parameter of each channel; and
performing, by the second electronic device, channel scoring on each channel based on the channel parameter of each channel.

3. The anti-interference method for wireless communication according to claim 2, wherein the channel parameter comprises a channel duty cycle and a channel received signal strength indicator RSSI, and the performing channel scoring on each channel based on the channel parameter of each channel comprises:
obtaining, by the second electronic device, a channel rate of each channel within the second preset time through calculation based on the channel duty cycle and the channel RSSI of each of the plurality of channels;
filtering, by the second electronic device, the channel rate of each channel within the second preset time based on a preset filtering algorithm, to obtain a channel rate of each channel; and
performing, by the second electronic device, channel scoring on each channel based on the channel rate of each channel, wherein
the channel rate is positively correlated with the channel score.

4. The anti-interference method for wireless communication according to claim 1, wherein the obtaining, by a second electronic device, channel scores of a plurality of channels on which a wireless communication link can be established to a first electronic device comprises:
receiving, by the second electronic device, the channel scores of the plurality of channels that are transferred by the first electronic device.

5. The anti-interference method for wireless communication according to claim 1, wherein the obtaining, by a second electronic device, channel scores of a plurality of channels on which a wireless communication link can be established to a first electronic device comprises:
performing, by the second electronic device, channel switching once every a first preset time, to listen on each of the plurality of channels for a second preset time, to obtain a channel parameter of each channel; and
obtaining, by the second electronic device, a first scoring result of each channel based on the channel parameter of each channel;
receiving, by the second electronic device, a second scoring result of each channel that is transferred by the first electronic device; and
obtaining, by the second electronic device, the channel score of each channel based on the first scoring result and the second scoring result.

6. The anti-interference method for wireless communication according to any one of claims 1 to 5, wherein the selecting a channel having a positive gain from the plurality of channels based on the channel scores comprises:
selecting, by the second electronic device from the plurality of channels, a channel having a highest channel score as the channel having the positive gain.

7. The anti-interference method for wireless communication according to any one of claims 1 to 5, wherein the selecting a channel having a positive gain from the plurality of channels based on the channel scores comprises:
when the second electronic device detects that an air interface latency of the first channel is greater than or equal to a preset threshold, selecting, by the second electronic device, the channel having the positive gain from the plurality of channels based on the channel scores.

8. The anti-interference method for wireless communication according to claim 7, wherein the second electronic device comprises a listening state and a working state, and the sending, by the second electronic device, a first channel switching frame to the first electronic device comprises:
when the second electronic device detects, in the working state, that the air interface latency of the first channel reaches the preset threshold, obtaining, by the second electronic device, a channel switching time through calculation based on a time node at which it is currently detected that the air interface latency reaches the preset threshold and a time node of entering the listening state next time; and
when the second electronic device determines that the channel switching time meets a preset collision requirement, sending, by the second electronic device, the first channel switching frame to the first electronic device, wherein
the preset collision requirement comprises that the channel switching time is less than a third preset time.

9. The anti-interference method for wireless communication according to any one of claims 1 to 5, wherein the selecting a channel having a positive gain from the plurality of channels based on the channel scores comprises:
when the second electronic device is in a preset service scenario, selecting, by the second electronic device, the channel having the positive gain from the plurality of channels based on the channel scores.

10. The anti-interference method for wireless communication according to claim 9, further comprising:
when the second electronic device ends the preset service scenario, sending, by the second electronic device, a second channel switching frame to the first electronic device, so that the first electronic device switches back from the channel having the positive gain to the first channel; and
when the second electronic device receives again the acknowledgment character transferred by the first electronic device, switching, by the second electronic device, back from the channel having the positive gain to the first channel.

11. The anti-interference method for wireless communication according to any one of claims 1 to 10, wherein the first electronic device is a group client (GC) device, and the second electronic device is a group owner (GO) device.

12. The anti-interference method for wireless communication according to any one of claims 1 to 10, wherein the second electronic device establishes a wireless communication link to each of the first electronic device and a third electronic device on the first channel, and the anti-interference method for wireless communication further comprises:
sending, by the second electronic device, the first channel switching frame to the third electronic device, so that the third electronic device switches from the first channel to the channel having the positive gain.

13. The anti-interference method for wireless communication according to claim 12, wherein the switching, by the second electronic device when the second electronic device receives an acknowledgment character transferred by the first electronic device, from the first channel to the channel having the positive gain comprises:
switching, by the second electronic device when the second electronic device receives the acknowledgment character transferred by the first electronic device or an acknowledgment character transferred by the third electronic device, from the first channel to the channel having the positive gain.

14. An anti-interference method for wireless communication, comprising:
obtaining, by a first electronic device, channel scores of a plurality of channels on which a wireless communication link can be established to a second electronic device;
sending, by the first electronic device, the channel scores of the plurality of channels to the second electronic device, so that the second electronic device selects a channel having a positive gain from the plurality of channels based on the channel scores;
when the first electronic device receives a channel switching frame sent by the second electronic device, sending, by the first electronic device, an acknowledgment character to the second electronic device; and
switching, by the first electronic device, from a first channel to the channel having the positive gain, wherein
the first channel is a channel used by the first electronic device to currently establish a wireless communication link to the second electronic device.

15. The anti-interference method for wireless communication according to claim 14, wherein the obtaining, by a first electronic device, channel scores of a plurality of channels on which a wireless communication link can be established to a second electronic device comprises:
performing, by the first electronic device, channel switching once every a first preset time, to listen on each of the plurality of channels for a second preset time, to obtain a channel parameter of each channel; and
performing, by the first electronic device, channel scoring on each channel based on the channel parameter of each channel.

16. The anti-interference method for wireless communication according to claim 15, wherein the channel parameter comprises a channel duty cycle and a channel received signal strength indicator RSSI, and the performing channel scoring on each channel based on the channel parameter of each channel comprises:
obtaining, by the first electronic device, a channel rate of each channel within the second preset time through calculation based on the channel duty cycle and the channel RSSI of each of the plurality of channels;
filtering, by the first electronic device, the channel rate of each channel within the second preset time based on a preset filtering algorithm, to obtain a channel rate of each channel; and
performing, by the first electronic device, channel scoring on each channel based on the channel rate of each channel, wherein
the channel rate is positively correlated with the channel score.

17. The anti-interference method for wireless communication according to claim 14, wherein the second electronic device establishes a wireless communication link to each of the first electronic device and a third electronic device on the first channel, and the anti-interference method for wireless communication further comprises:
when the first electronic device receives no channel switching frame sent by the second electronic device and the third electronic device receives the channel switching frame sent by the second electronic device, switching, by the first electronic device, from the first channel to a channel having a highest channel score after the wireless communication link between the first electronic device and the second electronic device is disconnected for preset duration.

18. The anti-interference method for wireless communication according to any one of claims 14 to 17, wherein the first electronic device is a group client (GC) device, and the second electronic device is a group owner (GO) device.

19. A computer readable storage medium, wherein computer instructions are stored in the computer readable storage medium, and when the computer instructions run on an electronic device, the electronic device is enabled to perform the anti-interference method for wireless communication according to any one of claims 1 to 18.

20. An electronic device, wherein the electronic device comprises a processor and a memory, the memory is configured to store instructions, and the processor is configured to invoke the instructions in the memory, so that the electronic device performs the anti-interference method for wireless communication according to any one of claims 1 to 18.

21. A chip, coupled to a memory in an electronic device, wherein the chip is configured to control the electronic device to perform the anti-interference method for wireless communication according to any one of claims 1 to 18.
